# EUROPEAN PATENT APPLICATION

(11) **EP 2 858 044 A1**
(43) Date of publication of application: **08.04.2015**
(21) Application number: 13887591.9
(22) Date of filing: 29.06.2013
(51) Int. Cl.: G07F 19/00, G06Q 20/32

(54) **CONTACTLESS PAYMENT METHOD, DEVICE AND SYSTEM**

(71) Applicant: Huawei Device Co., Ltd., Longgang District Shenzhen Guangdong 518129 (CN)
(72) Inventor: WANG, Miao, Shenzhen Guangdong 518129 (CN); JIN, Zhihao, Shenzhen Guangdong 518129 (CN); CHANG, Xinmiao, Shenzhen Guangdong 518129 (CN)
(74) Representative: Pfenning, Meinig & Partner GbR
(86) International application number: PCT/CN2013/078516
(87) International publication number: WO 2014/205849

(57) **Abstract**

The present invention provides a contactless payment method, device, and system. After a mobile terminal having an NFC function receives, from a reading terminal, a selection command including a financial document application identifier, the mobile terminal returns, if it is determined that a supplementary payment application needs to be executed, a PPSE corresponding to the financial document application identifier to the reading terminal, where the PPSE includes a first application identifier of a bank payment application and a second application identifier of the supplementary payment application, and a priority of the second application identifier is higher than a priority of the first application identifier, so that the reading terminal acquires, according to priorities of payment applications in the PPSE, payment information corresponding to the payment applications from the mobile terminal in sequence to complete payment, thereby improving efficiency and user experience of contactless payment.

## Description

### TECHNICAL FIELD

Embodiments of the present invention relate to the field of communications technologies, and in particular, to a contactless payment method, device, and system.

### BACKGROUND

Based on a near field communication (Near Field Communication, NFC for short) technology, a contactless payment (also known as mobile payment) service uses a card simulation mode of an NFC device to simulate the NFC device as a bank card to complete payment. This payment mode has become a current mainstream technology of mobile payment.

A user applies for a mobile payment account from an operator, and a bank payment application runs on an NFC mobile phone of the user. However, with development of e-commerce, a user often uses a membership card and a voucher during shopping. Therefore, for example, a specific process of mobile payment by using an NFC mobile phone is as follows: A user gives a membership card and a voucher to a cashier at the end of shopping; the cashier swipes the membership card to access a personal account of the user and then verifies validity of the voucher by accessing a server of an issuer of the voucher, or querying voucher records on a local server, or the like, where information such as points earned are recorded in the membership card, and the voucher may be in a form of paper, a short message, a multimedia message, or a picture; after the cashier performs settlement and deducts a discount generated by the voucher and membership card, the user brings an NFC mobile phone closer to a reading terminal supporting an NFC function; when the reading terminal detects the NFC mobile phone, the reading terminal interacts with a bank payment application in the NFC mobile phone to complete payment.

It can be seen that, when the prior art is used to perform payment, a user has to provide a cashier with supplementary payment information such as a membership card and a voucher and then use an NFC mobile phone to complete payment, which causes low efficiency of an existing contactless payment mode.

### SUMMARY

Embodiments of the present invention provide a contactless payment method, device, and system to improve efficiency of contactless payment.

In a first aspect, an embodiment of the present invention provides a contactless payment method, including:
receiving, from a reading terminal, a selection command including a financial document application identifier;
returning, if it is determined that a supplementary payment application needs to be executed, a proximity payment system environment PPSE corresponding to the financial document application identifier to the reading terminal, where the PPSE includes a first application identifier that indicates a bank payment application and a second application identifier that indicates the supplementary payment application, and a priority of the second application identifier is higher than a priority of the first application identifier;
invoking, when a selection command including the second application identifier is received from the reading terminal, the supplementary payment application to perform contactless communication with the reading terminal; and
invoking, when a selection command including the first application identifier is received from the reading terminal, the bank payment application to perform contactless payment with the reading terminal.

With reference to the first aspect, in a first possible implementation manner, the bank payment application is stored on a secure element SE in the mobile terminal, and the supplementary payment application is stored on a device host DH in the mobile terminal; or
the bank payment application and the supplementary payment application are both stored on the DH; or
the bank payment application and the supplementary payment application are both stored on the SE.

With reference to the first aspect or the first possible implementation manner, in a second possible implementation manner, the priority of the second application identifier and the priority of the first application identifier are set by the bank payment application.

With reference to any one of the foregoing possible implementation manners of the first aspect, in a third possible implementation manner,
the invoking the supplementary payment application to perform contactless communication with the reading terminal includes:
invoking the supplementary payment application to send information about a membership card to the reading terminal, and receiving point information returned by the reading terminal; or
invoking the supplementary payment application to send information about a voucher to the reading terminal, and receiving confirmation information about using the voucher from the reading terminal; or
invoking the supplementary payment application to send information about a membership card and information about a voucher to the reading terminal, and receiving point information and confirmation information about using the voucher that are returned by the reading terminal.

With reference to any one of the foregoing possible implementation manners of the first aspect, in a fourth possible implementation manner,
the second application identifier is allocated by the bank payment application.

In a second aspect, an embodiment of the present invention provides a contactless payment method, including:
sending, when it is determined that contactless payment needs to be performed, a selection command including a financial document application identifier to a mobile terminal having an NFC function;
receiving, from the mobile terminal, a PPSE corresponding to the financial document application identifier, where the PPSE includes a first application identifier that indicates a bank payment application and a second application identifier that indicates a supplementary payment application, and a priority of the second application identifier is higher than a priority of the first application identifier;
sending, according to priorities of application identifiers in the PPSE, a selection command including the second application identifier to the mobile terminal;
receiving first information that is returned by the mobile terminal according to the selection command including the second application identifier, and returning second information to the mobile terminal according to the first information;
sending, when it is determined, according to the first information, that payment is not completed, a selection command including the first application identifier to the mobile terminal; and
receiving third information that is returned by the mobile terminal according to the selection command including the first application identifier, and completing contactless payment.

With reference to the second aspect, in a first possible implementation manner,
the first information includes information about a membership card and/or information about a voucher; and
the second information includes point information and/or confirmation information.

In a third aspect, an embodiment of the present invention provides a mobile terminal having an NFC function, including:
a first receiving module, configured to receive, from a reading terminal, a selection command including a financial document application identifier;
a first processing module, configured to return, if it is determined that a supplementary payment application needs to be executed, a proximity payment system environment PPSE corresponding to the financial document application identifier to the reading terminal, where the PPSE includes a first application identifier that indicates a bank payment application and a second application identifier that indicates the supplementary payment application, and a priority of the second application identifier is higher than a priority of the first application identifier;
a first invoking module, configured to invoke, when the first receiving module receives, from the reading terminal, a selection command including the second application identifier, the supplementary payment application to perform contactless communication with the reading terminal; and
a second invoking module, configured to invoke, when the first receiving module receives, from the reading terminal, a selection command including the first application identifier, the bank payment application to perform contactless payment with the reading terminal.

With reference to the third aspect, in a first possible implementation manner,
the bank payment application is stored on a secure element SE in the mobile terminal, and the supplementary payment application is stored on a device host DH in the mobile terminal; or
the bank payment application and the supplementary payment application are both stored on the DH; or
the bank payment application and the supplementary payment application are both stored on the SE.

With reference to the third aspect or the first possible implementation manner, in a second possible implementation manner,
the priority of the second application identifier and the priority of the first application identifier are set by the bank payment application.

With reference to any one of the foregoing possible implementation manners of the third aspect, in a third possible implementation manner,
the first invoking module is specifically configured to:
invoke the supplementary payment application to send information about a membership card to the reading terminal, and receive point information returned by the reading terminal; or
invoke the supplementary payment application to send information about a voucher to the reading terminal, and receive confirmation information about using the voucher from the reading terminal; or
invoke the supplementary payment application to send information about a membership card and information about a voucher to the reading terminal, and receive point information and confirmation information about using the voucher that are returned by the reading terminal.

With reference to any one of the foregoing possible implementation manners of the third aspect, in a fourth possible implementation manner,
the second application identifier is allocated by the bank payment application.

In a fourth aspect, an embodiment of the present invention provides a reading terminal, including:
a sending module, configured to send, when it is determined that contactless payment needs to be performed, a selection command including a financial document application identifier to a mobile terminal having an NFC function;
a second receiving module, configured to receive, from the mobile terminal, a PPSE corresponding to the financial document application identifier, where the PPSE includes a first application identifier that indicates a bank payment application and a second application identifier that indicates a supplementary payment application, and a priority of the second application identifier is higher than a priority of the first application identifier; and
a second processing module, configured to send, according to priorities of application identifiers in the PPSE, a selection command including the second application identifier to the mobile terminal; where
the second receiving module is further configured to receive first information that is returned by the mobile terminal according to the selection command including the second application identifier;
the second processing module is further configured to return second information to the mobile terminal according to the first information; and
the second processing module is further configured to send, when it is determined, according to the first information, that payment is not completed, a selection command including the first application identifier to the mobile terminal, receive third information that is returned by the mobile terminal according to the selection command including the first application identifier, and complete contactless payment.

With reference to the fourth aspect, in a first possible implementation manner,
the first information includes information about a membership card and/or information about a voucher; and
the second information includes point information and/or confirmation information.

In a fifth aspect, an embodiment of the present invention provides a contactless payment system, including the foregoing mobile terminal having an NFC function and the foregoing reading terminal.

In a sixth aspect, an embodiment of the present invention provides a mobile terminal having an NFC function, including a processor, an NFC chip, and a memory, where the memory is a SIM card or an SD card;
the memory is configured to store a bank payment application and/or a supplementary payment application;
the NFC chip is configured to receive, from a reading terminal, a selection command including a financial document application identifier;
the processor is configured to return, if it is determined that the supplementary payment application needs to be executed, a proximity payment system environment PPSE corresponding to the financial document application identifier to the reading terminal through the NFC chip, where the PPSE includes a first application identifier that indicates the bank payment application and a second application identifier that indicates the supplementary payment application, and a priority of the second application identifier is higher than a priority of the first application identifier;
the processor is further configured to invoke, when a selection command including the second application identifier is received from the reading terminal through the NFC chip, the supplementary payment application to perform contactless communication with the reading terminal; and
the processor is further configured to invoke, when a selection command including the first application identifier is received from the reading terminal through the NFC chip, the bank payment application to perform contactless payment with the reading terminal.

With reference to the sixth aspect, in a first possible implementation manner, a process of invoking, by the processor, the supplementary payment application to perform contactless communication with the reading terminal specifically includes:
invoking the supplementary payment application to send information about a membership card to the reading terminal, and receiving point information returned by the reading terminal; or
invoking the supplementary payment application to send information about a voucher to the reading terminal, and receiving confirmation information about using the voucher from the reading terminal; or
invoking the supplementary payment application to send information about a membership card and information about a voucher to the reading terminal, and receiving point information and confirmation information about using the voucher that are returned by the reading terminal.

In a seventh aspect, an embodiment of the present invention provides a reading terminal, including a processor, a memory, a communication interface, and a bus, where the processor, the memory, and the communication interface are connected through the bus, the memory is configured to store a program code, and the processor executes the program code and is configured to:
send, when it is determined that contactless payment needs to be performed, a selection command including a financial document application identifier to a mobile terminal having an NFC function;
receive, from the mobile terminal, a PPSE corresponding to the financial document application identifier, where the PPSE includes a first application identifier that indicates a bank payment application and a second application identifier that indicates a supplementary payment application, and a priority of the second application identifier is higher than a priority of the first application identifier;
send, according to priorities of application identifiers in the PPSE, a selection command including the second application identifier to the mobile terminal;
receive first information that is returned by the mobile terminal according to the selection command including the second application identifier, and return second information to the mobile terminal according to the first information;
send, when it is determined, according to the first information, that payment is not completed, a selection command including the first application identifier to the mobile terminal; and
receive third information that is returned by the mobile terminal according to the selection command including the first application identifier, and complete contactless payment.

The contactless payment method, device, and system provided by the embodiments of the present invention enable a mobile terminal having an NFC function to compatibly process bank payment information and supplementary payment information and allow a user to automatically complete payment with a reading terminal by using the mobile terminal having an NFC function, which improves efficiency of contactless payment.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a contactless payment method according to an embodiment of the present invention;
FIG. 2 is a flowchart of another contactless payment method according to an embodiment of the present invention;
FIG. 3 is a schematic structural diagram of a mobile terminal having an NFC function according to an embodiment of the present invention;
FIG. 4 is a schematic structural diagram of a reading terminal according to an embodiment of the present invention;
FIG. 5 is a schematic structural diagram of a contactless payment system according to an embodiment of the present invention;
FIG. 6 is a schematic structural diagram of hardware of a mobile terminal having an NFC function according to an embodiment of the present invention; and
FIG. 7 is a schematic structural diagram of hardware of a reading terminal according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

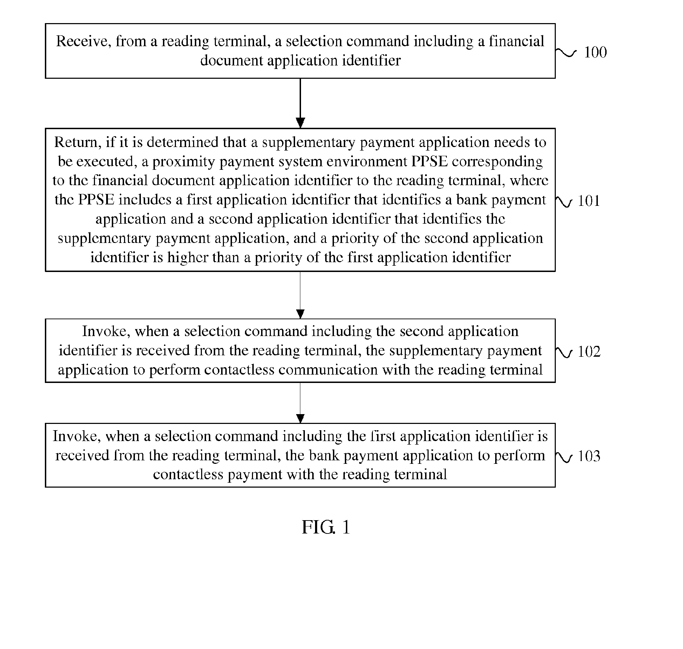

FIG. 1 is a flowchart of a contactless payment method according to an embodiment of the present invention. As shown in FIG. 1, the method includes the following steps:

Step 100: Receive, from a reading terminal, a selection command including a financial document application identifier.

After a cashier performs settlement on shopping of a user, the user first starts a bank payment application on a mobile terminal having an NFC function, sets an NFCC on the mobile terminal to a card simulation mode, and then brings the mobile terminal closer to a reading terminal having an NFC function to perform payment. After detecting the mobile terminal moving closer, the reading terminal sends a selection command including a financial document application identifier to the mobile terminal. The mobile terminal receives the selection command through the NFCC and sends the selection command to the local bank payment application, so that the bank payment application receives, from the reading terminal, the selection command including the financial document application identifier. The financial document application identifier is stipulated in the *China Financial Integrated Circuit (IC) Card Specification,* and the financial document application identifier is specifically "2PAY.SYS.DDF01".

It should be noted that the involved mobile terminal having an NFC function in the embodiments of the present invention includes a smartphone, an electronic wallet, and the like. Persons skilled in the art may understand that each NFC device that has functions of DH, NFCC, and SE entities can execute the contactless payment method involved in this embodiment. Using a smartphone as an example, a DH corresponds to a processor of the mobile phone, for example, a baseband processor; an NFCC corresponds to an NFC chip; and an SE corresponds to a SIM card or an SD card (Secure Digital Card).

Step 101: Return, if it is determined that a supplementary payment application needs to be executed, a proximity payment system environment PPSE corresponding to the financial document application identifier to the reading terminal, where the PPSE includes a first application identifier that indicates the bank payment application and a second application identifier that indicates the supplementary payment application, and a priority of the second application identifier is higher than a priority of the first application identifier.

The DH parses the received selection command, acquires the financial document application identifier, locally acquires, if it is determined that the supplementary payment application needs to be executed, the PPSE corresponding to the financial document application identifier, where the PPSE includes the first application identifier that indicates the bank payment application and the second application identifier that indicates the supplementary payment application, and the priority of the second application identifier is higher than the priority of the first application identifier, and then sends the PPSE to the NFCC. The NFCC sends the PPSE to the reading terminal, so that the reading terminal acquires the PPSE corresponding to the financial document application identifier. The reading terminal parses the received PPSE, acquires the first application identifier that indicates the bank payment application and the second application identifier that indicates the supplementary payment application, learns that the priority of the second application identifier is higher than the priority of the first application identifier, selects application identifiers according to priorities of the application identifiers in descending order, and then acquires, according to the application identifiers, payment information corresponding to payment applications from the mobile terminal to complete payment.

Step 102: Invoke, when a selection command including the second application identifier is received from the reading terminal, the supplementary payment application to perform contactless communication with the reading terminal.

The reading terminal sends, according to the priorities of the application identifiers in the PPSE, the selection command including the second application identifier to the mobile terminal. The mobile terminal invokes, when parsing the received selection command and acquiring the second application identifier, first information corresponding to the supplementary payment application to perform contactless communication with the reading terminal and receives second information returned by the reading terminal, where the first information includes information about a membership card and/or information about a voucher, and the second information includes point information and/or confirmation information. Therefore, invoking the supplementary payment application to perform contactless communication with the reading terminal specifically includes:
invoking the supplementary payment application to send the information about the membership card to the reading terminal, and receiving the point information returned by the reading terminal; or invoking the supplementary payment application to send the information about the voucher to the reading terminal, and receiving the confirmation information about using the voucher from the reading terminal; or invoking the supplementary payment application to send the information about the membership card and the information about the voucher to the reading terminal, and receiving the point information and the confirmation information about using the voucher that are returned by the reading terminal.

Step 103: Invoke, when a selection command including the first application identifier is received from the reading terminal, the bank payment application to perform contactless payment with the reading terminal.

When determining, according to the first information returned by the mobile terminal, that payment is not completed, the reading terminal sends the selection command including the first application identifier to the mobile terminal. The mobile terminal parses the received selection command, acquires the first application identifier, and invokes the bank payment application to return third information to the reading terminal, so that the reading terminal receives the third information that is returned by the mobile terminal according to the selection command including the first application identifier and completes contactless payment.

In the contactless payment method provided by this embodiment, after a mobile terminal having an NFC function receives, from a reading terminal, a selection command including a financial document application identifier, the mobile terminal returns, if it is determined that a supplementary payment application needs to be executed, a PPSE corresponding to the financial document application identifier to the reading terminal, where the PPSE includes a first application identifier that indicates a bank payment application and a second application identifier that indicates the supplementary payment application, and a priority of the second application identifier is higher than a priority of the first application identifier, so that the reading terminal acquires, according to priorities of payment applications in the PPSE in descending order and according to application identifiers of the payment applications, payment information corresponding to the payment applications from the mobile terminal in sequence. This enables the mobile terminal having an NFC function to compatibly process bank information and supplementary information and allows a user to automatically complete payment with the reading terminal by using the mobile terminal having an NFC function, thereby improving efficiency of contactless payment.

Based on the foregoing embodiment, storage positions of the bank payment application and the supplementary payment application may be adjusted as required. For example, the bank payment application is stored on a secure element SE in the mobile terminal, and the supplementary payment application is stored on a device host DH in the mobile terminal; or the bank payment application and the supplementary payment application are both stored on the DH; or the bank payment application and the supplementary payment application are both stored on the SE.

It should be noted that the bank payment application and the supplementary payment application are different application programs, where the bank payment application is an application program for managing a bank card account used for payment, and the supplementary payment application is an application program for managing a membership card and/or a voucher.

Based on the foregoing embodiment, the priority of the second application identifier and the priority of the first application identifier are set by the bank payment application.

Based on the foregoing embodiment, specifically, there are many manners for an NFCC on the mobile terminal to receive, from the reading terminal, the selection command including the financial document application identifier and send the selection command to the bank payment application having the PPSE. The manners include:

Manner 1: The NFCC receives, from the reading terminal, the selection command including the financial document application identifier, parses the selection command, acquires the financial document application identifier, and then views a local pre-configured routing table. If it is learned, according to the routing table, that a destination corresponding to the financial document application identifier is the SE, the NFCC learns, through judgment, that the bank payment application is stored on the SE and therefore sends the selection command to the bank payment application on the SE. If the destination corresponding to the financial document application identifier is unknown according to the routing table, the NFCC determines that the bank payment application is stored on the DH and therefore sends the selection command to the bank payment application on the DH. The routing table on the NFCC may be configured by using the SE or the DH.

Manner 2: The NFCC receives, from the reading terminal, the selection command including the financial document application identifier and broadcasts the selection command to the DH and the SE. After receiving the selection command broadcast by the NFCC, the DH and the SE parse the selection command, acquire the financial document application identifier, and determine whether the bank payment application including the PPSE corresponding to the financial document application identifier is stored on them. If the bank payment application is stored on them, they send a confirmation response to the NFCC; if the bank payment application is not stored on them, they do not respond.

It should be noted that the supplementary payment application in the embodiments of the present invention is set before delivery of the mobile terminal or is downloaded from a relevant server by the mobile terminal. The supplementary payment application manages and maintains supplementary payment information, where the supplementary payment information specifically includes a membership card, a voucher, and the like. The second application identifier of the supplementary payment application may be preset by the system or may be temporarily allocated. A specific allocation process is described as follows: The supplementary payment application sends an application identifier allocation request message to the bank payment application. After receiving the application identifier allocation request message from the supplementary payment application, the bank payment application returns an allocation response message including the second application identifier of the supplementary payment application to the supplementary payment application.

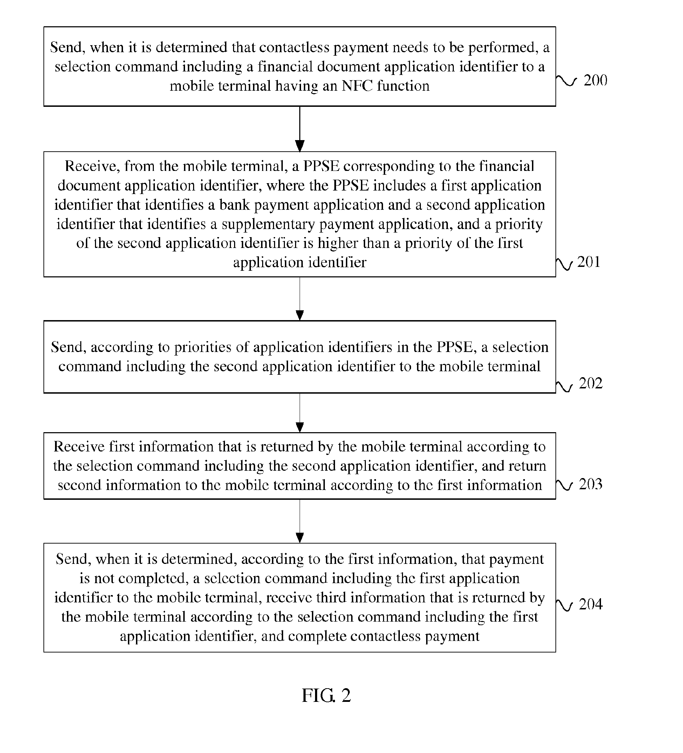

FIG. 2 is a flowchart of another contactless payment method according to an embodiment of the present invention. As shown in FIG. 2, the method includes the following steps:

Step 200: Send, when it is determined that contactless payment needs to be performed, a selection command including a financial document application identifier to a mobile terminal having an NFC function.

After a cashier performs settlement on shopping of a user, the user first starts a bank payment application on a mobile terminal having an NFC function, sets an NFCC on the mobile terminal to a card simulation mode, and then brings the mobile terminal closer to a reading terminal having an NFC function to perform payment. After detecting the mobile terminal moving closer, the reading terminal sends a selection command including a financial document application identifier to the mobile terminal, where the financial document application identifier is stipulated in the *China Financial Integrated Circuit (IC) Card Specification,* and the financial document application identifier is specifically "2PAY.SYS.DDF01".

Step 201: Receive, from the mobile terminal, a PPSE corresponding to the financial document application identifier, where the PPSE includes a first application identifier that indicates the bank payment application and a second application identifier that indicates a supplementary payment application, and a priority of the second application identifier is higher than a priority of the first application identifier.

The NFCC on the mobile terminal receives the selection command and sends it to the local bank payment application. Therefore, the bank payment application receives, from the reading terminal, the selection command including the financial document application identifier, and the bank payment application parses the received selection command, acquires the financial document application identifier, and locally acquires the PPSE corresponding to the financial document application identifier, where the PPSE includes the first application identifier that indicates the bank payment application and the second application identifier that indicates the supplementary payment application, and the priority of the second application identifier is higher than the priority of the first application identifier. Then the bank payment application sends the PPSE to the NFCC, and the NFCC sends the PPSE to the reading terminal, so that the reading terminal acquires the PPSE corresponding to the financial document application identifier. The reading terminal parses the received PPSE, acquires the first application identifier and the second application identifier, and learns that the priority of the second application identifier is higher than the priority of the first application identifier.

Step 202: Send, according to priorities of application identifiers in the PPSE, a selection command including the second application identifier to the mobile terminal.

The reading terminal selects application identifiers of payment applications according to priorities of the payment applications in descending order, and acquires, according to the application identifiers, payment information corresponding to the payment applications from the mobile terminal to complete payment. The reading terminal first sends the selection command including the second application identifier to the mobile terminal.

Step 203: Receive first information that is returned by the mobile terminal according to the selection command including the second application identifier, and return second information to the mobile terminal according to the first information.

The mobile terminal invokes, when parsing the received selection command and acquiring the second application identifier, the first information corresponding to the supplementary payment application to perform contactless communication with the reading terminal, and receives the second information returned by the reading terminal, where the first information includes information about a membership card and/or information about a voucher, and the second information includes point information and/or confirmation information. Therefore, invoking the supplementary payment application to perform contactless communication with the reading terminal specifically includes:
invoking the supplementary payment application to send the information about the membership card to the reading terminal, and receiving the point information returned by the reading terminal; or invoking the supplementary payment application to send the information about the voucher to the reading terminal, and receiving the confirmation information about using the voucher from the reading terminal; or invoking the supplementary payment application to send the information about the membership card and the information about the voucher to the reading terminal, and receiving the point information and the confirmation information about using the voucher that are returned by the reading terminal.

Step 204: Send, when it is determined, according to the first information, that payment is not completed, a selection command including the first application identifier to the mobile terminal, receive third information that is returned by the mobile terminal according to the selection command including the first application identifier, and complete contactless payment.

When determining, according to the first information returned by the mobile terminal, that payment is not completed, the reading terminal sends the selection command including the first application identifier to the mobile terminal. The mobile terminal parses the received selection command, acquires the first application identifier, and invokes the bank payment application to return the third information to the reading terminal, so that the reading terminal receives the third information that is returned by the mobile terminal according to the selection command including the first application identifier and completes contactless payment.

In the contactless payment method provided by this embodiment, a reading terminal sends a selection command including a financial document application identifier to a mobile terminal having an NFC function, and receives a returned PPSE corresponding to the financial document application identifier, where the PPSE includes a first application identifier of a bank payment application and a second application identifier of a supplementary payment application, and a priority of the supplementary payment application is higher than a priority of the bank payment application, so as to acquire, according to priorities of payment applications in the PPSE in descending order and according to application identifiers of the payment applications, payment information corresponding to the payment applications from the mobile terminal in sequence to complete payment. This enables the mobile terminal having an NFC function to compatibly process bank information and supplementary information and allows a user to automatically complete payment with the reading terminal by using the mobile terminal having an NFC function, thereby improving efficiency of contactless payment.

For the difference of storage positions of the bank payment application and the supplementary payment application in the mobile terminal in the foregoing embodiment, including that: the bank payment application is stored on an SE and the supplementary payment application is stored on a DH, or the bank payment application and the supplementary payment application are both stored on the DH, or the bank payment application and the supplementary payment application are both stored on an SE, and for the purpose of more clearly describing a mobile payment process, specific implementation processes of the foregoing application scenarios are illustrated by using two embodiments.

Application scenario 1: The bank payment application is stored on the SE, and the supplementary payment application is stored on the DH. A specific mobile payment process is as follows:

Step 1: The DH initializes an NFCC, configures a routing table of the NFCC, and sets a destination point of a financial document application identifier "2PAY.SYS.DDF01" to the SE, indicating that after receiving data carrying the application identifier, the NFCC routes the data to the SE. In addition, the DH adds a first application identifier of the bank payment application to the routing table of the NFCC and sets a destination point of a route to the SE, indicating that after receiving data carrying the first application identifier, the NFCC routes the data to the SE.

Step 2: A user starts the supplementary payment application on the DH and imports supplementary payment information such as a membership card and/or a voucher into the supplementary payment application, where the supplementary payment information may be downloaded from a third-party server or may be locally stored.

Step 3: The supplementary payment application running on the DH sends an application identifier allocation request message to the bank payment application on the SE and receives, from the bank payment application, an allocation response message including a second application identifier of the supplementary payment application.

Step 4: The bank payment application sets a PPSE, where the PPSE includes the first application identifier that indicates the bank payment application and the second application identifier that indicates the supplementary payment application, and a priority of the supplementary payment application is higher than a priority of the bank payment application.

(The foregoing steps 1 to 4 belong to a preprocessing process in a mobile terminal having an NFC function.)

Step 5: The user activates the bank payment application on the mobile terminal. The DH sends an activation command to the SE. The SE activates the corresponding bank payment application and notifies the DH that the activation is successful. A configuration command is sent to the NFCC through the SE to set the NFCC to a card simulation mode.

Step 6: The user brings the mobile terminal having an NFC function closer to a reading terminal having an NFC function. After detecting the mobile terminal moving closer, the reading terminal sends a selection command whose financial document application identifier is "2PAY.SYS.DDF01" to the mobile terminal.

Step 7: After receiving the selection command, the NFCC routes the command to the bank payment application on the SE according to the route.

Step 8: The bank payment application returns, through the NFCC, the PPSE corresponding to the financial document application identifier to the reading terminal.

Step 9: The reading terminal receives and parses the PPSE, selects the second application identifier that indicates the supplementary payment application and with a highest priority, and sends a selection instruction including the second application identifier that indicates the supplementary payment application to the NFCC.

Step 10: After receiving the selection instruction, the NFCC parses the selection instruction, acquires the second application identifier, learns, through judgment, that the second application identifier is not in the routing table, and sends the selection instruction to the DH.

Step 11: The supplementary payment application running on the DH determines that the second application identifier matches its own application identifier and returns, through the NFCC, the supplementary payment information such as the membership card and/or the voucher to the reading terminal.

Step 12: The reading terminal verifies the supplementary payment information such as the membership card and/or the voucher with the third-party server or on a local server. If the verification is successful, the reading terminal performs balance settlement and determines whether payment needs to be continued. If payment needs to be continued, step 13 is executed; if payment does not need to be continued, the process ends.

Step 13: The reading terminal selects the bank payment application with a second highest priority from the PPSE to perform a next transaction, that is, the reading terminal sends a selection instruction including the first application identifier of the bank payment application to the NFCC.

Step 14: After receiving the selection instruction, the NFCC parses the selection instruction, acquires the first application identifier, learns, through judgment, that the first application identifier is routed to the SE, and then sends the selection instruction to the SE.

Step 15: The bank payment application running on the SE determines that the first application identifier matches its own application identifier and returns, through the NFCC, bank payment information to the reading terminal. The reading terminal sends the bank payment information to a corresponding bank back-end server to perform payment.

It should be noted that information between the SE and the DH may be exchanged directly or may be forwarded through the NFCC, which is selected according to a specific application protocol.

Application scenario 2: The bank payment application and the supplementary payment application are both stored on the DH. A specific mobile payment process is as follows:

Step 1: A user starts the bank payment application. The bank payment application running on the DH reads corresponding bank card account information and personal key information from the SE. It should be noted that the bank card account information and the personal key information may also be stored in the bank payment application on the DH. If the bank card account information and the personal key information are stored in the bank payment application on the DH, this step may be omitted.

Step 2: The user starts the supplementary payment application on the DH and imports supplementary payment information such as a membership card and/or a voucher into the supplementary payment application, where the supplementary payment information may be downloaded from a third-party server or may be locally stored.

Step 3: The supplementary payment application running on the DH sends an application identifier allocation request message to the bank payment application on the DH and receives, from the bank payment application, an allocation response message including a second application identifier of the supplementary payment application.

Step 4: The bank payment application sets a PPSE, where the PPSE includes the first application identifier that indicates the bank payment application and the second application identifier that indicates the supplementary payment application, and a priority of the supplementary payment application is higher than a priority of the bank payment application.

(The foregoing steps 1 to 4 belong to a preprocessing process in a mobile terminal having an NFC function.)

Step 5: The user sends, through the DH, a configuration command to an NFCC on the mobile terminal to set the NFCC to a card simulation mode.

Step 6: The user brings the mobile terminal having an NFC function closer to a reading terminal having an NFC function. After detecting the mobile terminal moving closer, the reading terminal sends a selection command whose financial document application identifier is "2PAY.SYS.DDF01" to the mobile terminal.

Step 7: After receiving the selection command, the NFCC routes the selection command to the bank payment application on the DH according to a routing table.

Step 8: The bank payment application on the DH returns, through the NFCC, the PPSE corresponding to the financial document application identifier to the reading terminal.

Step 9: The reading terminal receives and parses the PPSE, selects the second application identifier that indicates the supplementary payment application and with a highest priority, and sends a selection instruction including the second application identifier to the NFCC.

Step 10: After receiving the selection instruction, the NFCC parses the selection instruction, acquires the second application identifier, learns, through judgment, that the second application identifier is not in the routing table, and sends the selection instruction to the DH.

Step 11: The supplementary payment application running on the DH determines that the second application identifier matches its own application identifier and returns, through the NFCC, the supplementary payment information such as the membership card and/or the voucher to the reading terminal.

Step 12: The reading terminal verifies the supplementary payment information such as the membership card and/or the voucher with the third-party server or on a local server. If the verification is successful, the reading terminal performs balance settlement and determines whether payment needs to be continued. If payment needs to be continued, step 13 is executed; if payment does not need to be continued, the process ends.

Step 13: The reading terminal selects the bank payment application with a second highest priority from the PPSE to perform a next transaction, that is, the reading terminal sends a selection instruction including the first application identifier that indicates the bank payment application to the NFCC.

Step 14: After receiving the selection instruction, the NFCC parses the selection instruction, acquires the first application identifier, and sends the selection instruction to the DH according to the routing table.

Step 15: The bank payment application running on the DH determines that the first application identifier matches its own application identifier and returns, through the NFCC, bank payment information to the reading terminal. The reading terminal sends the bank payment information to a corresponding bank back-end server to perform payment.

Persons of ordinary skill in the art may understand that, all or a part of the steps in the foregoing method embodiments may be implemented by a program instructing relevant hardware. The aforementioned program may be stored in a computer readable storage medium. When the program runs, the steps of the foregoing method embodiments are performed. The aforementioned storage medium includes any medium capable of storing program codes, such as a ROM, a RAM, a magnetic disk, or an optical disk.

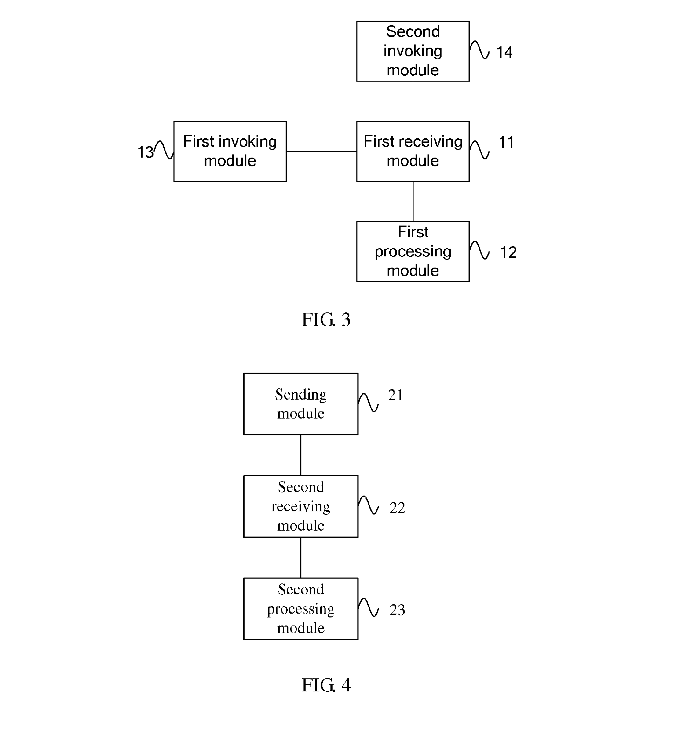

FIG. 3 is a schematic structural diagram of a mobile terminal having an NFC function according to an embodiment of the present invention. As shown in FIG. 3, the mobile terminal includes a first receiving module 11, a first processing module 12, a first invoking module 13, and a second invoking module 14. The receiving module 11 is configured to receive, from a reading terminal, a selection command including a financial document application identifier. The first processing module 12 is configured to return, if it is determined that a supplementary payment application needs to be executed, a proximity payment system environment PPSE corresponding to the financial document application identifier to the reading terminal, where the PPSE includes a first application identifier that indicates a bank payment application and a second application identifier that indicates the supplementary payment application, and a priority of the second application identifier is higher than a priority of the first application identifier. The first invoking module 13 is configured to invoke, when the first receiving module 11 receives, from the reading terminal, a selection command including the second application identifier, the supplementary payment application to perform contactless communication with the reading terminal. The second invoking module 14 is configured to invoke, when the first receiving module 11 receives, from the reading terminal, a selection command including the first application identifier, the bank payment application to perform contactless payment with the reading terminal.

For functions and processing processes of various modules in the mobile terminal having an NFC function provided by this embodiment, reference may be made to the method embodiment shown in the foregoing FIG. 1. Implementation principles and technical effects of the functions and the processing processes are similar to those in the method embodiment shown in the foregoing FIG. 1 and are not described herein again.

Specifically, storage positions of the bank payment application and the supplementary payment application may be selected as required, specifically including that:
the bank payment application is stored on a secure element SE in the mobile terminal, and the supplementary payment application is stored on a device host DH in the mobile terminal; or
the bank payment application and the supplementary payment application are both stored on the DH; or
the bank payment application and the supplementary payment application are both stored on the SE.

Based on the foregoing embodiment, the priority of the second application identifier and the priority of the first application identifier are set by the bank payment application.

Further, the first invoking module 13 is specifically configured to:
invoke the supplementary payment application to send information about a membership card to the reading terminal, and receive point information returned by the reading terminal; or
invoke the supplementary payment application to send information about a voucher to the reading terminal, and receive confirmation information about using the voucher from the reading terminal; or
invoke the supplementary payment application to send information about a membership card and information about a voucher to the reading terminal, and receive point information and confirmation information about using the voucher that are returned by the reading terminal.

Based on the foregoing embodiment, the second application identifier is allocated by the bank payment application.

FIG. 4 is a schematic structural diagram of a reading terminal according to an embodiment of the present invention. As shown in FIG. 4, the reading terminal includes a sending module 21, a second receiving module 22, and a second processing module 23, where:
the sending module 21 is configured to send, when it is determined that contactless payment needs to be performed, a selection command including a financial document application identifier to a mobile terminal having an NFC function;
the second receiving module 22 is configured to receive, from the mobile terminal, a PPSE corresponding to the financial document application identifier, where the PPSE includes a first application identifier that indicates a bank payment application and a second application identifier that indicates a supplementary payment application, and a priority of the second application identifier is higher than a priority of the first application identifier;
the second processing module 23 is configured to send, according to priorities of application identifiers in the PPSE, a selection command including the second application identifier to the mobile terminal;
the second receiving module 21 is further configured to receive first information that is returned by the mobile terminal according to the selection command including the second application identifier;
the second processing module 23 is further configured to return second information to the mobile terminal according to the first information; and
the second processing module 23 is further configured to send, when it is determined, according to the first information, that payment is not completed, a selection command including the first application identifier to the mobile terminal, receive third information that is returned by the mobile terminal according to the selection command including the first application identifier, and complete contactless payment.

The first information includes information about a membership card and/or information about a voucher. The second information includes point information and/or confirmation information.

For functions and processing processes of various modules in the reading terminal provided by this embodiment, reference may be made to the method embodiment shown in the foregoing FIG. 2. Implementation principles and technical effects of the functions and the processing processes are similar to those in the method embodiment shown in the foregoing FIG. 2 and are not described herein again.

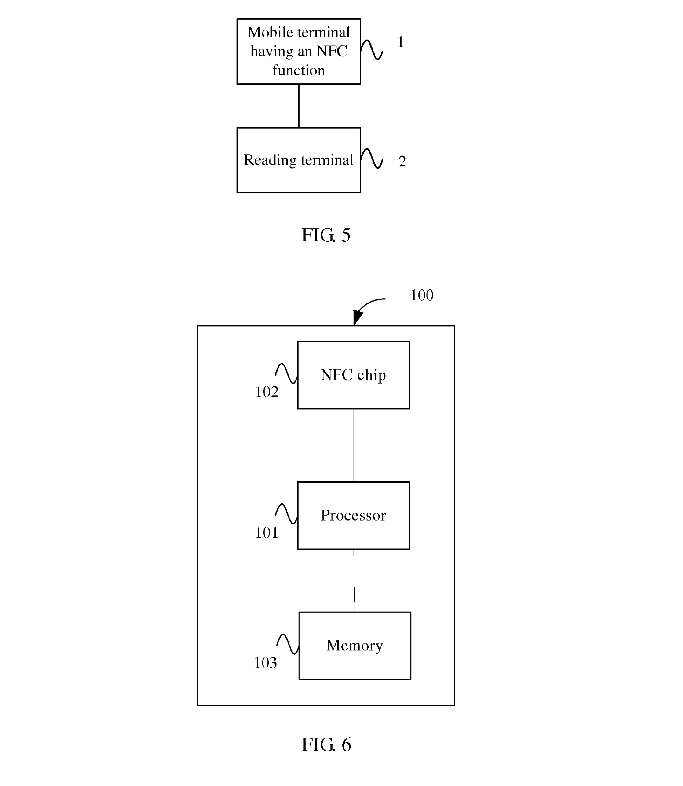

FIG. 5 is a schematic structural diagram of a contactless payment system according to an embodiment of the present invention. As shown in FIG. 5, the system includes a mobile terminal 1 having an NFC function and a reading terminal 2, where the mobile terminal 1 having an NFC function exchanges information with the reading terminal 2 by using an NFC controller in the mobile terminal 1 having an NFC function. The mobile terminal 1 having an NFC function may adopt the aforementioned mobile terminal having an NFC function in the present invention, and the reading terminal 2 may adopt the aforementioned reading terminal in the present invention.

For functions and processing processes of various modules in the contactless payment system provided by this embodiment, reference may be made to the foregoing method embodiments. Implementation principles and technical effects of the functions and the processing processes are similar to those in the foregoing method embodiments and are not described herein again.

FIG. 6 is a schematic structural diagram of hardware of a mobile terminal having an NFC function according to an embodiment of the present invention. As shown in FIG. 6, the mobile terminal 100 includes a processor 101, an NFC chip 102, and a memory 103, where the memory 103 is a SIM card or an SD card;
the memory 103 is configured to store a bank payment application and/or a supplementary payment application;
the NFC chip 102 is configured to receive, from a reading terminal, a selection command including a financial document application identifier;
the processor 101 is configured to return, if it is determined that the supplementary payment application needs to be executed, a proximity payment system environment PPSE corresponding to the financial document application identifier to the reading terminal through the NFC chip 102, where the PPSE includes a first application identifier that indicates the bank payment application and a second application identifier that indicates the supplementary payment application, and a priority of the second application identifier is higher than a priority of the first application identifier;
the processor 101 is further configured to invoke, when a selection command including the second application identifier is received from the reading terminal through the NFC chip 102, the supplementary payment application to perform contactless communication with the reading terminal; and
the processor 101 is further configured to invoke, when a selection command including the first application identifier is received from the reading terminal through the NFC chip 102, the bank payment application to perform contactless payment with the reading terminal.

Further, a process of invoking, by the processor 101, the supplementary payment application to perform contactless communication with the reading terminal specifically includes:
invoking the supplementary payment application to send information about a membership card to the reading terminal, and receiving point information returned by the reading terminal; or
invoking the supplementary payment application to send information about a voucher to the reading terminal, and receiving confirmation information about using the voucher from the reading terminal; or
invoking the supplementary payment application to send information about a membership card and information about a voucher to the reading terminal, and receiving point information and confirmation information about using the voucher that are returned by the reading terminal.

For a processing process in which the processor in the mobile terminal having an NFC function provided by this embodiment executes a program code in the memory, reference may be made to the foregoing method embodiments. Implementation principles and technical effects of the processing process are similar to those in the foregoing method embodiments and are not described herein again.

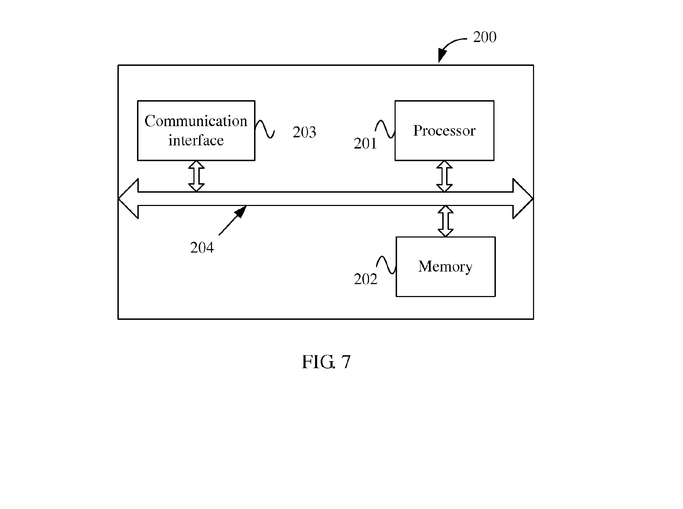

FIG. 7 is a schematic structural diagram of hardware of a reading terminal according to an embodiment of the present invention. As shown in FIG. 7, the reading terminal 200 includes a processor 201, a memory 202, a communication interface 203, and a bus 204, where the processor 201, the memory 202, and the communication interface 203 are connected through the bus 204. The bus 204 may be an ISA bus, a PCI bus, an EISA bus, or the like. The bus may be classified into an address bus, a data bus, a control bus, and the like. For ease of representation, the bus is represented by using only one bold line in FIG. 7, which, however, does not mean that there is only one bus or one type of bus.

The memory 202 is configured to store a program code, where the program code includes a computer operation instruction. The memory 202 may be a high-speed random access memory or may be a non-volatile memory (non-volatile memory), for example, at least one disk memory.

The processor 201 executes the program code and is configured to:
send, when it is determined that contactless payment needs to be performed, a selection command including a financial document application identifier to a mobile terminal having an NFC function;
receive, from the mobile terminal, a PPSE corresponding to the financial document application identifier, where the PPSE includes a first application identifier that indicates a bank payment application and a second application identifier that indicates a supplementary payment application, and a priority of the second application identifier is higher than a priority of the first application identifier;
send, according to priorities of application identifiers in the PPSE, a selection command including the second application identifier to the mobile terminal;
receive first information that is returned by the mobile terminal according to the selection command including the second application identifier, and return second information to the mobile terminal according to the first information;
send, when it is determined, according to the first information, that payment is not completed, a selection command including the first application identifier to the mobile terminal; and
receive third information that is returned by the mobile terminal according to the selection command including the first application identifier, and complete contactless payment.

For a processing process in which the processor in the reading terminal provided by this embodiment executes the program code in the memory, reference may be made to the foregoing method embodiments. Implementation principles and technical effects of the processing process are similar to those in the foregoing method embodiments and are not described herein again.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A contactless payment method, comprising:
receiving, from a reading terminal, a selection command comprising a financial document application identifier;
returning, if it is determined that a supplementary payment application needs to be executed, a proximity payment system environment PPSE corresponding to the financial document application identifier to the reading terminal, wherein the PPSE comprises a first application identifier that indicates a bank payment application and a second application identifier that indicates the supplementary payment application, and a priority of the second application identifier is higher than a priority of the first application identifier;
invoking, when a selection command comprising the second application identifier is received from the reading terminal, the supplementary payment application to perform contactless communication with the reading terminal; and
invoking, when a selection command comprising the first application identifier is received from the reading terminal, the bank payment application to perform contactless payment with the reading terminal.

2. The contactless payment method according to claim 1, wherein:
the bank payment application is stored on a secure element SE in a mobile terminal, and the supplementary payment application is stored on a device host DH in the mobile terminal; or
the bank payment application and the supplementary payment application are both stored on the DH; or
the bank payment application and the supplementary payment application are both stored on the SE.

3. The contactless payment method according to claim 1 or 2, wherein:
the priority of the second application identifier and the priority of the first application identifier are set by the bank payment application.

4. The contactless payment method according to any one of claims 1 or 3, wherein the invoking the supplementary payment application to perform contactless communication with the reading terminal comprises:
invoking the supplementary payment application to send information about a membership card to the reading terminal, and receiving point information returned by the reading terminal; or
invoking the supplementary payment application to send information about a voucher to the reading terminal, and receiving confirmation information about using the voucher from the reading terminal; or
invoking the supplementary payment application to send information about a membership card and information about a voucher to the reading terminal, and receiving point information and confirmation information about using the voucher that are returned by the reading terminal.

5. The contactless payment method according to any one of claims 1 to 4, wherein:
the second application identifier is allocated by the bank payment application.

6. A contactless payment method, comprising:
sending, when it is determined that contactless payment needs to be performed, a selection command comprising a financial document application identifier to a mobile terminal having an NFC function;
receiving, from the mobile terminal, a PPSE corresponding to the financial document application identifier, wherein the PPSE comprises a first application identifier that indicates a bank payment application and a second application identifier that indicates a supplementary payment application, and a priority of the second application identifier is higher than a priority of the first application identifier;
sending, according to priorities of application identifiers in the PPSE, a selection command comprising the second application identifier to the mobile terminal;
receiving first information that is returned by the mobile terminal according to the selection command comprising the second application identifier;
returning second information to the mobile terminal according to the first information;
sending, when it is determined, according to the first information, that payment is not completed, a selection command comprising the first application identifier to the mobile terminal; and
receiving third information that is returned by the mobile terminal according to the selection command comprising the first application identifier, and completing contactless payment.

7. The contactless payment method according to claim 6, wherein:
the first information comprises information about a membership card and/or information about a voucher; and
the second information comprises point information and/or confirmation information.

8. A mobile terminal having an NFC function, comprising:
a first receiving module, configured to receive, from a reading terminal, a selection command comprising a financial document application identifier;
a first processing module, configured to return, if it is determined that a supplementary payment application needs to be executed, a proximity payment system environment PPSE corresponding to the financial document application identifier to the reading terminal, wherein the PPSE comprises a first application identifier that indicates a bank payment application and a second application identifier that indicates the supplementary payment application, and a priority of the second application identifier is higher than a priority of the first application identifier;
a first invoking module, configured to invoke, when the first receiving module receives, from the reading terminal, a selection command comprising the second application identifier, the supplementary payment application to perform contactless communication with the reading terminal; and
a second invoking module, configured to invoke, when the first receiving module receives, from the reading terminal, a selection command comprising the first application identifier, the bank payment application to perform contactless payment with the reading terminal.

9. The mobile terminal having an NFC function according to claim 8, wherein:
the bank payment application is stored on a secure element SE in the mobile terminal, and the supplementary payment application is stored on a device host DH in the mobile terminal; or
the bank payment application and the supplementary payment application are both stored on the DH; or
the bank payment application and the supplementary payment application are both stored on the SE.

10. The mobile terminal having an NFC function according to claim 8 or 9, wherein:
the priority of the second application identifier and the priority of the first application identifier are set by the bank payment application.

11. The mobile terminal having an NFC function according to any one of claims 8 to 11, wherein the first invoking module is specifically configured to:
invoke the supplementary payment application to send information about a membership card to the reading terminal, and receive point information returned by the reading terminal; or
invoke the supplementary payment application to send information about a voucher to the reading terminal, and receive confirmation information about using the voucher from the reading terminal; or
invoke the supplementary payment application to send information about a membership card and information about a voucher to the reading terminal, and receive point information and confirmation information about using the voucher that are returned by the reading terminal.

12. The mobile terminal having an NFC function according to any one of claims 8 to 11, wherein:
the second application identifier is allocated by the bank payment application.

13. A reading terminal, comprising:
a sending module, configured to send, when it is determined that contactless payment needs to be performed, a selection command comprising a financial document application identifier to a mobile terminal having an NFC function;
a second receiving module, configured to receive, from the mobile terminal, a PPSE corresponding to the financial document application identifier, wherein the PPSE comprises a first application identifier that indicates a bank payment application and a second application identifier that indicates a supplementary payment application, and a priority of the second application identifier is higher than a priority of the first application identifier; and
a second processing module, configured to send, according to priorities of application identifiers in the PPSE, a selection command comprising the second application identifier to the mobile terminal; wherein
the second receiving module is further configured to receive first information that is returned by the mobile terminal according to the selection command comprising the second application identifier;
the second processing module is further configured to return second information to the mobile terminal according to the first information; and
the second processing module is further configured to send, when it is determined, according to the first information, that payment is not completed, a selection command comprising the first application identifier to the mobile terminal, receive third information that is returned by the mobile terminal according to the selection command comprising the first application identifier, and complete contactless payment.

14. The reading terminal according to claim 13, wherein:
the first information comprises information about a membership card and/or information about a voucher; and
the second information comprises point information and/or confirmation information.

15. A contactless payment system, comprising the mobile terminal having an NFC function according to any one of claims 8 to 12 and the reading terminal according to claim 13 or 14.
